# EUROPÄISCHE PATENTSCHRIFT

(11) **EP 0 579 160 B1**
(45) Veröffentlichungstag und Bekanntmachung des Hinweises auf die Patenterteilung: **06.09.1995**
(21) Anmeldenummer: 93111167.8
(22) Anmeldetag: 13.07.1993
(51) Int. Cl.: B23Q 7/14, B62D 65/00

(54) **Bearbeitungsstation für Fahrzeugkarosserien in einer Transferlinie**
Processing station for vehicle bodies on a transfer line
Poste de travail pour des carrosseries de voiture dans une ligne de transfer

(30) Priorität: 15.07.1992 DE 9209686 U
(43) Veröffentlichungstag der Anmeldung: 19.01.1994
(73) Patentinhaber: KUKA Schweissanlagen & Roboter GmbH, D-86165 Augsburg (DE)
(72) Erfinder: Pöckl, Franz, D-86399 Bobingen (DE)
(74) Vertreter: Ernicke, Hans-Dieter, Dipl.-Ing.

(56) Entgegenhaltungen:
- WO-A-92/19486
- DE-A- 3 606 058
- DE-A- 3 823 947
- DE-A- 3 914 970
- DE-U- 8 812 396
- US-A- 5 125 141
- PATENT ABSTRACTS OF JAPAN vol. 11, no. 175 (M-596)(2622) 5. Juni 1987

## Beschreibung

Die Erfindung betrifft eine Bearbeitungsstation für Fahrzeugkarosserien in einer Transferlinie mit den Merkmalen im Oberbegriff des Hauptanspruches.

Eine derartige Bearbeitungsstation ist aus der DE-OS 36 06 058 bekannt. In den Magazinen sind auswechselbare Spannrahmen gespeichert, die auf den jeweiligen Karosserietyp adaptiert sind und bei einem TYpenwechsel ausgetauscht werden. Die vorbekannte Bearbeitungsstation dient zum Heften oder Fertigschweißen vorgespannter Fahrzeugkarosserien. Die verschiedenen Karosserie-Teile wie Bodengruppe, Seitenteile und Dachteile müssen in einer vorgeschalteten Rüststation auf einem geeigneten Förderer oder Träger assembliert und vorläufig gespannt werden. In der Bearbeitungsstation bringen die Spannrahmen die Karosserie-Teile dann in eine schweißgerechte Position zueinander und halten sie dort während der Bearbeitung durch Schweißroboter fest. Die bekannte Bearbeitungsstation erfordert durch die zusätzliche Rüststation einen erhöhten Bau- und Steuerungsaufwand. Bei einem Karosseriewechsel muß außerdem auch die Rüststation umgestellt werden, oder es sind mehrere parallele Rüststationen erforderlich.

Aus der DE-OS 38 23 947 ist eine Beabeitungsstation bekannt, bei der Karosserie-Seitenteile der Arbeitsstelle direkt zugeführt und dort an einen Spannrahmen übergeben werden. Der Spannrahmen wird hierzu aus der Arbeitsposition herausbewegt und in eine Übergabestellung gebracht, aus der er dann mit dem Seitenteil in die Arbeitsposition zurückkehrt. Die Magazine für die Spannrahmen sind hierbei in Paaren über und unter der Arbeitsstelle angeordnet. Aus diesem Stand der Technik ist es ferner bekannt, Spannrahmen in einer Kreisbahn zirkulieren zu lassen und an einer geeigneten Stelle eine Rüststation zur Übergabe von Karosserie-Seitenteilen an die Spannrahmen vorzusehen. Jedem Kreislauf ist ein Magazin für andere Spannrahmentypen zugeordnet.

Es ist Aufgabe der vorliegenden Erfindung, eine Bearbeitungsstation für Fahrzeugkarosserien aufzuzeigen, die die Zufuhr von Karosserie-Teilen in kürzerer Zeit und auf einfachere Weise ermöglicht.

Die Erfindung löst diese Aufgabe mit den Merkmalen im Hauptanspruch.
Gemäß der Erfindung werden die Karosserie-Teile, insbesondere die Karosserie-Seitenteile, zuerst einem im Magazin befindlichen Spannrahmen zugeführt und mit diesem beim Rahmenwechsel dann in die Arbeitsstellung gebracht. Die Zuführung der Karosserie-Teile kostet hierdurch nur wenig Zeit. Außerdem ist der konstruktive Aufwand relativ gering. Insbesondere bedarf es keiner besonderen Anbauten der Arbeitsstelle. Hier können die für die spannrahmenzuführung vorgesehenen Bauteile beibehalten werden.

Es empfiehlt sich, für jedes Magazinpaar eine gemeinsame Zuführvorrichtung vorzusehen, was den Bau- und Steuerungsaufwand verringert. Die Magazine innerhalb eines Paares werden wechselweise beschickt, so daß auch kein Zeitverlust eintritt.

Die Zuführvorrichtung ist vorzugsweise oberhalb der Magazine angeordnet, so daß die Magazine beziehungsweise die Spannrahmen von oben her beladen werden, wodurch die Zuführung in einem funktionsfreien Bereich erfolgen kann. Das Magazin braucht dann nur aus der Beladestellung in die wechselstellung zur Abgabe des Spannrahmens zu drehen. Zu diesem Zweck empfiehlt es sich, die Magazine als liegende Trommeln mit zwei oder vier Aufnahmen für die Spannrahmen auszubilden, so daß auch verschiedene Rahmentypen für unterschiedliche Fahrzeugkarosserien gespeichert werden können.

Zur Gestaltung der Zuführvorrichtung gibt es unterschiedliche Möglichkeiten. In der bevorzugten Ausführungsform bestehen sie aus einer Transportbahn, vorzugsweise einer Schienenbahn, auf der über Hängewagen oder andere geeignete Transportmittel die Karosserie-Teile bis zur Übergabeposition an den Magazinen gebracht werden. Dort sind Hubförderer vorgesehen, die für die Übergabe der Karosserie-Seitenteile an den Spannrahmen sorgen. Die Hubförderer können auch Bestandteil der Transportbahn sein, indem beispielsweise ein Schienenstück gehoben und gesenkt wird.

Die erfindungsgemäße Bearbeitungsstation kann als Kombination einer Heft- oder Schweißstation mit einer kompletten Rüststation für die Zuführung und Positionierung aller benötigten Karosserie-Teile ausgebildet sein. Für diesen Fall kann eine Dachteilzuführung integriert sein.

Die Erfindung ist in den Zeichnungen beispielsweise und schematisch dargestellt. Im einzelnen zeigen
- Fig. 1:: eine Bearbeitungsstation mit einem Ausschnitt der Transferlinie in der Draufsicht,
- Fig. 2:: einen Querschnitt durch die Bearbeitungsstation gemäß Schnittlinie A-A von Fig. 1 und
- Fig. 3:: einen Querschnitt durch die Bearbeitungsstation entsprechend Schnittlinie B-B von Fig. 1.

In den Zeichnungen ist eine Bearbeitungsstation (1) in einer Transferlinie (2) für eine Fahrzeugfertigung dargestellt. Die Bearbeitungsstation (1) dient als kombinierte Rüststation und Heft- beziehungsweise Schweißstation, in der Karosserie-Teile (3,4,5) zugeführt, zueinander in Position gebracht, gespannt, geheftet und/oder ausgeschweißt werden.

Die Bodengruppe der Fahrzeugkarossie (3) wird auf der Transferlinie (2) über einen geeigneten Karosserieförderer (19), beispielsweise ein Shuttle, einen Palettenförderer oder dergleichen, zugeführt. Die Karosserie-Seitenteile (4) werden in nachfolgend näher beschriebener Weise magazinierten Spannrahmen (6) zugeführt und mit diesen in Schweißposition an der Arbeitsstelle (9) gebracht. Für die Dachteile (5) ist eine Dachteilzuführung (17) vorgesehen. Die Assemblierung der Karosserie-Teile (3,4,5) erfolgt an der Arbeitsstelle (9). Mit den nachfolgend näher beschriebenen Spannrahmen (6) werden die Karosserie-Teile (4,5,6) in schweißgerechte Position zueinander gebracht und gespannt. Für die Durchführung der verschiedenen Verschweißungen sind Verarbeitungsvorrichtungen (10), insbesondere Roboter, an der Arbeitsstelle (9) vorgesehen. Die Roboter (10) können dabei auch andere Bearbeitungsvorgänge durchführen.

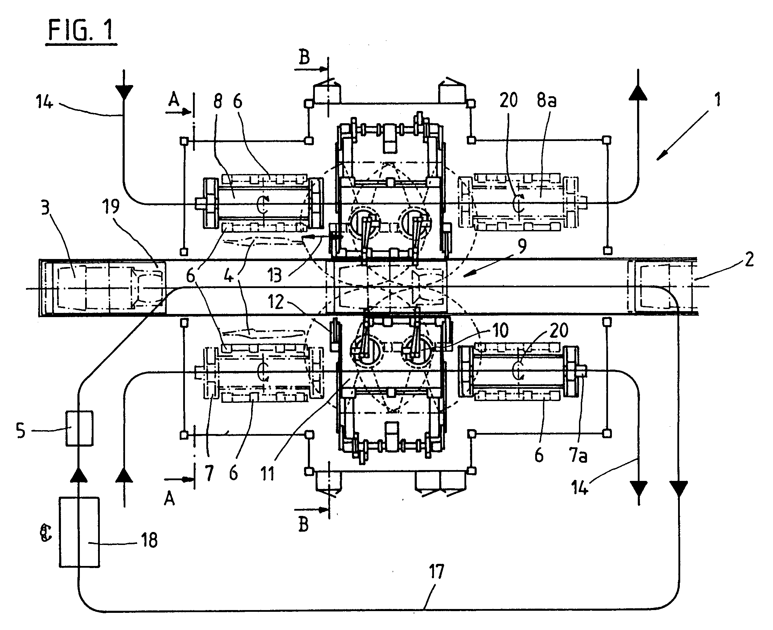

Zu beiden Seiten der Transferlinie (2) ist jeweils ein Paar von Magazinen (7,7a) und (8,8a) angeordnet. Innerhalb jedes Paares ist dabei ein Magazin (7,8) vor der Arbeitsstelle (9) und das andere Magazin (7a,8a) hinter der Arbeitsstelle (9) angeordnet. Die Magazine (7,7a,8,8a) sind als liegende Trommeln mit zwei oder vier Aufnahmen (21) für Spannrahmen (6) ausgebildet. Die Drehachse (20) der Trommeln verläuft horizontal und im wesentlichen parallel zur Transferlinie (2). Wie Fig. 1 verdeutlicht, sind innerhalb eines Paares die Magazine (7,7a) und (8,8a) fluchtend angeordnet, so daß sie parallel zur Transferlinie (2) in einer Linie stehen. Dies ermöglicht eine Durchladefunktion.

Die Magazine (7,7a,8,8a) sind paarweise über die zwischenliegende Arbeitsstelle (9) hinweg durch eine gemeinsame Transportvorrichtung (13) miteinander verbunden. Die Transportvorrichtung (13) ist im einzelnen nicht dargestellt und in Fig. 1 nur durch einen Pfeil symbolisiert. Mit der Transportvorrichtung (13) wird von dem einen Magazin (7,8) ein mit einem Seitenteil (4) beladener Spannrahmen (6) zur Arbeitsstelle (9) gebracht und gleichzeitig ein vorher dort befindlicher und nach Beendigung des Schweißvorganges leerer Spannrahmen an das andere Magazin (7a,8a) abgegeben. Dieser Spannrahmen (6) kann in den Magazinen (7a,8a) wieder neu mit einem Seitenteil (4) beladen werden. Während des Beladevorganges kann gleichzeitig an der Arbeitsstelle (9) der eingangs beschriebene Rüst- und Schweißprozeß ablaufen.

Die Bearbeitungsvorrichtung (10) beziehungsweise die Roboter sind auf einem Schlitten (11) montiert, der außerdem eine Rahmenaufnahme (12) trägt. Der Schlitten (11) ist quer zur Transferlinie (2) beweglich. In Fig. (1) nehmen beide Schlitten (11) die Arbeitsposition an der Transferlinie (2) ein. Für den Rahmenwechsel fahren die Schlitten (11) an eine Wechselposition zurück, in der auch die Rahmenaufnahme (12) fluchtend zu den zugehörigen Magazinpaaren (7,7a und 8,8a) steht und sich im Funktionsbereich der Transportvorrichtung (13) befindet. In dieser Wechselposition kann in der vorbeschriebenen Weise der leere Spannrahmen (6) aus der Rahmenaufnahme (12) in ein Magazin (7a,8a) mit leerer Aufnahme (21) abgegeben und ein neuer beladener Spannrahmen (6) in die Rahmenaufnahme eingefahren werden. Der Schlitten (11) bewegt sich dann wieder nach vorn zur Transferlinie (2) in die in Fig. 1 gezeigte Arbeitsposition.

Wie Fig. 1 bis 3 verdeutlichen, ist die Zuführvorrichtung (14) für die Seitenteile (4) oberhalb der Magazine (7,7a,8,8a) angeordnet. Hierbei werden innerhalb jedes Paares die Magazine (7,7a) und (8,8a) durch eine gemeinsame Zuführvorrichtung (14) bedient. Die Zuführvorrichtung (14) besteht aus einer Transportbahn (15), die zu einer nicht dargestellten Aufgabestation für die Seitenteile (4) führt. Die Transportbahn (15) ist beispielsweise als Schienenbahn mit Laufwagen ausgebildet, an denen mit geeigneten Greifern die Seitenteile (4) hängen. Letztere sind dabei vorzugsweise so ausgebildet, daß sie auch unterschiedliche Seitenteile (4) fassen können. Alternativ kann auch ein Austausch mit einem geeigneten Greifer vorgesehen sein.

An den Magazinen (7,7a,8,8a) weisen die Zuführvorrichtungen (14) jeweils einen Hubförderer (16) auf, der die Seitenteile (4) von der obenliegenden Transportbahn (15) zu dem bereitstehenden Spannrahmen (6) bringt. Die Magazine (7,7a,8,8a) haben zuvor um beispielsweise 90° gedreht und den vorher übernommenen leeren Spannrahmen (6) aus der vertikalen seitlichen Wechselposition in die obenliegende horizontale Beladestation gebracht. Die spannrahmen (6) sind mit geeigneten steuerbaren Greifvorrichtungen zum Festhalten der vom Hubförderer (16) übergebenen Seitenteile (4) ausgerüstet. Die Magazine (7,7a,8,8a) besitzen ihrerseits geeignete Antriebs- und Steuervorrichtungen zum Betätigen dieser Greifer.

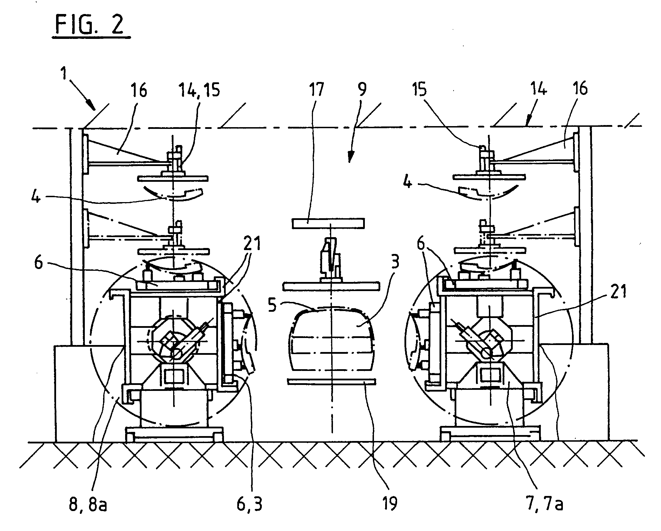

Aus der Beladeposition gemäß Fig. 2 drehen die betreffenden Magazine (7,7a,8,8a) dann vorzugsweise wieder um 90° zurück in die Wechselposition, aus der die beladenen Spannrahmen (6) an die Arbeitsstelle (9) übergeben werden. Sind die Magazine (7,7a,8,8a) mit vier Aufnahmen (21) ausgestattet, können sie auch um jeweils 90° in der gleichen Richtung weiterdrehen. Alternativ ist es auch möglich, mit vier Aufnahmen (21) zwei Typen von Spannrahmen (6) zu bevorraten und beim Karosseriewechsel im Tausch einzusetzen. Vorzugsweise sind die Spannrahmen (6) ohnehin mit Wechselwerkzeugen zum Spannen unterschiedlicher Karosserie-Teile (4) versehen und dadurch auch für mehrere Karosserie-Typen, zum Beispiel eine zweitürige und eine viertürige Limousine, geeignet.

Die Transportbahn (15) und die Hubförderer (16) sind an einem geeigneten Gestell gelagert. Der Hubförderer (16) kann einen Bestandteil der Transportbahn (15) bilden. Beispielsweise ist hierzu ein Schienenteil der Transportbahn (15) abgetrennt, das mit dem Hubförderer (16) auf- und abbewegt wird. Der Hubförderer (16) kann in allen Richtungen zum Lösen und zur Übergabe der Karosserie Teile (4) aufweisen.

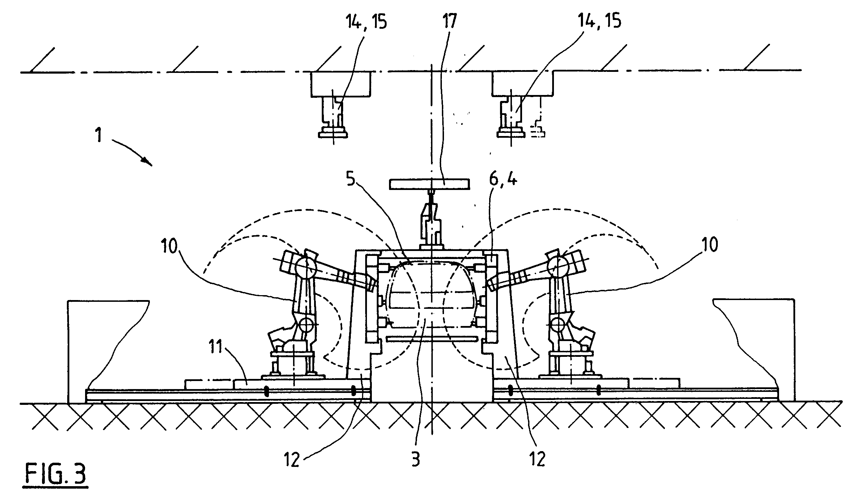

Die Dachteilzuführung (17) ist als Kreisbahn ausgebildet und besitzt eine Aufgabestation (18), an der die Dachteile (5) bereitgestellt und übergeben werden. Eine ähnliche Aufgabestation ist auch für die Zuführvorrichtung (14) für die Seitenteile (4) vorgesehen. Die Dachteilzuführung (17) mündet vor den Magazinen (7,8) an der Transferlinie (2). Wie Fig. 2 und 3 verdeutlichen, erstreckt sich die Dachteilzuführung (17) dann in der Mitte längs und oberhalb der Transferlinie (2) bis hinter die anderen Magazine (7a,8a) und führt dann wieder zur Aufgabestation (18) zurück. Die Dachteilzuführung (17) ist in ähnlicher Weise wie die Zuführvorrichtungen (14) als Hängeförderer mit Schienenbahn, Greifern und Hubmitteln ausgerüstet.

Fig. 3 zeigt die Rüst- und Schweißstellung, in der die Karosserieteile (3,4,5) zusammengefügt und gespannt sind und in der auch die Roboter (10) in Aktion treten. Aus dieser Ansicht ist auch ersichtlich, wie die Rahmenaufnahmen (12) über die Spannrahmen (6) die Seitenteile (4) in die schweißgerechte Position bringen und dort halten.

Abwandlungen der gezeigten und beschriebenen Ausführungsform sind in verschiedener Weise möglich. Zum einen können die beschriebenen Anordnungen auch nur auf einer Seite der Transferlinie (2) angeordnet sein. Ferner kann die Dachteilzuführung (17) weggelassen und in eine nachfolgende Bearbeitungsstation integriert sein. Die Seitenteilzuführung (4) zu den Magazinen (7,7a,8,8a) muß nicht von oben her erfolgen. Dies kann auch an einer anderen Seite des Magazins geschehen. Entsprechend anders ist dann die Zuführvorrichtung (14) gestaltet. Es ist auch möglich, die Zuführvorrichtungen (14) in vier Einzelvorrichtungen, für jedes Magazin eine eigene, aufzuspalten. Anstelle drehbarer Trommelmagazine können auch in geeigneten Schienen umlaufende Magazine mit gleicher oder ähnlicher Bewegungsrichtung der Spannrahmen vorgesehen sein.

### BEZUGSZEICHENLISTE

- 1: Bearbeitungsstation
- 2: Transferlinie
- 3: Fahrzeugkarosserie
- 4: Karosserieteil, Seitenteil
- 5: Karosserieteil, Dachteil
- 6: Spannrahmen
- 7: Magazin
- 7a: Magazin
- 8: Magazin
- 8a: Magazin
- 9: Arbeitsstelle
- 10: Bearbeitungsvorrichtung, Roboter
- 11: Schlitten
- 12: Rahmenaufnahme
- 13: Transportvorrichtung
- 14: Zuführvorrichtung
- 15: Transportbahn
- 16: Hubförderer
- 17: Dachteilzuführung
- 18: Aufgabestation
- 19: Karosserieförderer
- 20: Drehachse
- 21: Aufnahme

## Patentansprüche

1. Bearbeitungsstation für Fahrzeugkarosserien in einer Transferlinie, mit mindestens zwei im Paar vor und hinter der Arbeitsstelle angeordneten beweglichen Magazinen, die Aufnahmen für mindestens zwei auswechselbare Spannrahmen aufweisen, und mit einer Transportvorrichtung, die die Spannrahmen zwischen den Magazinen und der Arbeitsstelle hin und her befördert, dadurch **gekennzeichnet**, daß die Magazine (7,7a,8,8a) als drehbare oder umlaufende Magazine mit einer im wesentlichen längs der Transferlinie (2) ausgerichteten Drehachse (20) ausgebildet sind und mit einer Zuführvorrichtung (14) verbunden sind, die Karosserie-Teile (4) zu den magazinierten Spannrahmen (6) bringt und an diese übergibt.

2. Bearbeitungsstation nach Anspruch 1, dadurch **gekennzeichnet**, daß für ein Paar von Magazinen (7,7a,8,8a) eine gemeinsame Zuführvorrichtung (14) vorgesehen ist.

3. Bearbeitungsstation nach Anspruch 1 oder 2, dadurch **gekennzeichnet**, daß die Zuführvorrichtung (14) oberhalb der Magazine (7,7a,8,8a) angeordnet ist.

4. Bearbeitungsstation nach Anspruch 1, 2 oder 3, dadurch **gekennzeichnet**, daß die Magazine (7,7a,8,8a) als liegende Trommeln mit zwei oder vier Aufnahmen (21) für Spannrahmen (6) ausgebildet sind.

5. Bearbeitungsstation nach Anspruch 1 oder einem der folgenden, dadurch **gekennzeichnet**, daß die Zuführvorrichtung (14) eine Transportbahn (15) und einen Hubförderer (16) aufweist.

6. Bearbeitungsstation nach Anspruch 1 oder einem der folgenden, dadurch **gekennzeichnet**, daß zusätzlich eine Dachteilzuführung (17) vorgesehen ist, die längs und oberhalb der Transferlinie (2) durch die Bearbeitungsstation (1) führt.

## Claims

1. A processing station for vehicle bodies in a transfer line, having at least two movable magazines which are arranged pairwise in front of and behind the working area and comprise receptacles for at least two interchangeable clamping frames, and having a transporting device which conveys the clamping frames to and fro between the magazines and the working area, characterised in that the magazines (7,7a,8,8a) are designed as rotatable or revolving magazines with an axis of rotation (20) aligned substantially along the transfer line (2) and are connected to a feeding device (14) which brings body parts (4) to the magazined clamping frames (6) and transfers them to the latter.

2. A processing station according to Claim 1, characterised in that for a pair of magazines (7,7a,8,8a) a common feeding device (14) is provided.

3. A processing station according to Claim 1 or 2, characterised in that the feeding device (14) is arranged above the magazines (7,7a,8,8a).

4. A processing station according to Claim 1, 2 or 3, characterised in that the magazines (7,7a,8,8a) are designed as horizontal drums having two or four receptacles (21) for clamping frames (6).

5. A processing station according to Claim 1 or one of the subsequent claims, characterised in that the feeding device (14) comprises a transporting path (15) and a lifting conveyor (16).

6. A processing station according to Claim 1 or one of the subsequent claims, characterised in that there is additionally provided a roof part feeding means (17) which passes through the processing station (1), along and above the transfer line (2).

## Revendications

1. Poste de travail pour des carrosseries de véhicules dans une chaîne transfert, comportant au moins deux magasins mobiles disposés par couples en amont et en aval du site de travail et qui comportent des logements pour au moins deux cadres de blocage interchangeables, et comportant un dispositif de transport, qui entraîne en va-et-vient les cadres de blocage entre les magasins et le site de travail, caractérisé par le fait que les magasins (7,7a,8,8a) sont réalisés sous la forme de magasins rotatifs ou circulants possédant un axe de rotation (20) dirigés sensiblement le long de la chaîne transfert (2) et sont reliés à un dispositif d'amenée (14), qui amène des pièces de carrosserie (4) aux cadres de blocage (6) placés dans le magasin et les transfère sur ces cadres.

2. Poste de travail suivant la revendication 1, caractérisé par le fait qu'un dispositif d'amenée commun (14) est prévu pour un couple de magasins (7,7a,8a).

3. Poste de travail suivant la revendication 1 ou 2, caractérisé par le fait que le dispositif d'amenée (14) est disposé au-dessus des magasins (7,7a,8,8a).

4. Poste de travail suivant la revendication 1, 2 ou 3, caractérisé par le fait que les magasins (7,7a,8,8a) sont agencés sous la forme de tambours horizontaux comportant deux ou quatre logements (21) pour des cadres de blocage (6).

5. Poste de travail suivant la revendication 1 ou l'une des suivantes, caractérisé par le fait que le dispositif d'amenée (4) possède une voie de transport (15) et un convoyeur de levage (16).

6. Poste de travail suivant la revendication 1 ou l'une des suivantes, caractérisé par le fait qu'il est prévu en supplément un dispositif (17) d'amenée de pièces de toit, qui s'étend le long et au-dessus de la chaîne transfert (2) et traverse le poste de travail (1).
